# EUROPÄISCHE PATENTSCHRIFT

(11) **EP 2 652 475 B1**
(45) Veröffentlichungstag und Bekanntmachung des Hinweises auf die Patenterteilung: **08.07.2015**
(21) Anmeldenummer: 11796670.5
(22) Anmeldetag: 08.12.2011
(51) Int. Cl.: G01N 9/00, G01F 23/296, G01M 3/00, G01N 29/036, G01M 3/28, G01M 3/24, B65D 90/50

(54) **SYSTEM ZUR ÜBERWACHUNG DER DICHTHEIT EINES TANKS**
SYSTEM FOR MONITORING THE LEAK-TIGHTNESS OF A TANK
SYSTÈME DE SURVEILLANCE DE L'ÉTANCHÉITÉ D'UN RÉSERVOIR

(30) Priorität: 15.12.2010 DE 202010016623 U
(43) Veröffentlichungstag der Anmeldung: 23.10.2013
(73) Patentinhaber: Endress + Hauser Messtechnik GmbH+Co. KG, 79576 Weil am Rhein (DE)
(72) Erfinder: FRITZ, Thomas, 79650 Schopfheim (DE); SPRINGMANN, Thorsten, 79688 Hausen (DE); MISSELWITZ, Dirk, 22395 Hamburg (DE)
(74) Vertreter: Andres, Angelika Maria
(86) Internationale Anmeldenummer: PCT/EP2011/072242
(87) Internationale Veröffentlichungsnummer: WO 2012/080092

(56) Entgegenhaltungen:
- DE-A1-102008 040 101
- US-A- 3 782 180
- Anonymous: "Vibrationsgrenzschalter für Flüssigkeiten - Liquiphant T FTL20", E-direct , XP002670041, Gefunden im Internet: URL:http://www.e-direct.ch/eh/e-direct/ch/ de/home.nsf/?Open&DirectURL=C1256F4E005220 05C1256F660052D4F7 [gefunden am 2012-02-21]

## Beschreibung

Die vorliegende Erfindung betrifft ein System zur Überwachung der Dichtheit eines Tanks, welcher zumindest teilweise mit einem flüssigen Medium, welches eine geringere Dichte als Wasser besitzt, insbesondere Treibstoff, gefüllt ist.

Lagertanks, insbesondere zur Beherbergung von Ölen, beispielsweise Benzin oder anderen Treibstoffen, sind in der Regel doppelwandig ausgeführt und weisen eine umlaufende Flüssigkeitsauffangrinne auf. Diese ist mit einem Ablaufrohr verbunden, welches beispielsweise in die Kanalisation mündet. In der Regel sammelt sich in der Flüssigkeitsauffangrinne Regenwasser an, welches durch das Ablaufrohr abfließen kann. Weist der Tank jedoch ein Leck auf, kann die im Tank gelagerte Flüssigkeit an dieser Stelle austreten und sich ebenfalls in der Auffangrinne ansammeln. Neben dem Verlust des Lagerguts hat dessen Austreten auch ökologische Konsequenzen, sodass bei derartigen Tanks ein System zur Leckageerkennung eingesetzt wird.

Zur Erkennung eines Lecks in der Tankwandung werden häufig Sensorkabel eingesetzt, (siehe US 3782 180) welche auf dem Boden oder an der Wandung umlaufend verlegt werden und in das Kabel eintretende Flüssigkeit kapazitiv detektieren. Die Lebensdauer und die Möglichkeit der Funktionsüberprüfung derartiger Sensorkabel sind jedoch start begrenzt, was zu einer hohen Austauschrate führt. Dies bringt hohe Kosten mit sich.

Die Aufgabe der Erfindung besteht daher darin, ein System zur Überwachung der Dichtheit eines Tanks anzugeben, welches eine lange Lebensdauer besitzt und somit gegenüber der bisherigen Lösung Kosten spart.

Die Aufgabe wird gelöst durch ein System zur Überwachung der Dichtheit eines Tanks, welcher zumindest teilweise mit einer Flüssigkeit gefüllt ist, wobei die Flüssigkeit eine geringere Dichte als Wasser aufweist, und welcher über eine Flüssigkeitsauffangrinne und eine mit dieser verbundene Flüssigkeitsablaufrohrleitung verfügt, mit einem eine Talsohle aufweisenden Behältnis, welches derart im Wesentlichen waagerecht in die Flüssigkeitsablaufrohrleitung integriert ist, dass sich durch die Flüssigkeitsablaufrohrleitung fließendes Medium in der Talsohle ansammelt, mit einem Stauelement, welches das Behältnis derart in einen zulaufseitigen Teilbereich und einen ablaufseitigen Teilbereich unterteilt, dass sich ein Ölabscheider ausbildet, mit einem ersten vibronischen Messgerät mit einer in den zulaufseitigen Teilbereich der Talsohle hineinragenden ersten schwingfähigen Einheit, welches bestimmt, ob die Dichte des die erste schwingfähige Einheit umgebenden Mediums einen vorgegebenen Grenzwert unterschreitet, und einen entsprechenden Messwert ausgibt, mit einem zweiten vibronischen Messgerät mit einer zweiten schwingfähigen Einheit, welche höchstens auf der Höhe der ersten schwingfähigen Einheit angeordnet ist, welches detektiert, ob die zweite schwingfähige Einheit mit Medium bedeckt ist, und einen entsprechenden Messwert ausgibt und mit einer Auswerteeinheit, welcher die Messwerte des ersten Messgerätes und des zweiten Messgerätes zugeführt sind, und welche an Hand der Messwerte bestimmt, ob sich Flüssigkeit aus dem Tank in dem Behältnis befindet.

Bei den beiden vibronischen Messgeräten handelt es sich bevorzugt um so genannte Schwinggabeln mit zwei paddelförmigen Zinken als schwingfähige Einheit. Derartige Messgeräte werden von der Anmelderin unter dem Namen "Liquiphant" für Füllstands- und Dichtemessung hergestellt und vertrieben.

Das erfindungsgemäße System nutzt die bei den üblichen Tanks zur Aufnahme von Öl, Treibstoff, oder anderen Gefahrenstoffen ohnehin vorhandene Ablaufrohrleitung der Auffangrinne zur Anbringung eines Messbehältnisses, mittels welchem eine Leckage bereits bei kleinen Austrittsmengen detektierbar ist. Das Detektionsprinzip beruht auf der unterschiedlichen Dichte des im Normalfall durch Niederschlag im Ablaufsystem vorhandenen Wassers und der im Fall einer Leckage aus dem Tank austretenden Flüssigkeit.

In der Talsohle des in die Ablaufrohrleitung eingebrachten Behältnisses sammelt sich Wasser an, sodass sich in der Regel ständig Wasser im Behältnis befindet. Die beiden schwingfähigen Einheiten sind dann beide von Wasser bedeckt, sodass das zweite Messgerät im Normalfall "bedeckt" meldet und das erste Messgerät die Dichte von Wasser misst. Eine von dem ersten Messgerät detektierte Dichteänderung geht mit dem Austreten von Flüssigkeit aus dem Tank einher, da die austretende Flüssigkeit zu dem Wasser in das Behältnis gelangt. Durch das Stauelement wird vermieden, dass die Flüssigkeit mit geringerer Dichte direkt von der Zulaufseite zur Ablaufseite durchströmt, ohne in die Talsohle zu gelangen und dort detektiert zu werden. Behältnisse mit einem Zulauf, einem Ablauf, und einem Stauelement zur Anstauung der leichteren Flüssigkeit sind als Ölabscheider aus Abwasserbehandlungsanlagen bekannt.

Bei Neuinstallation des Systems, sowie beispielsweise durch Verdunstung und sinkendem Pegelstand des Wassers in der Talsohle, kann es vorkommen, dass die erste schwingfähige Einheit nicht oder nicht vollständig mit Flüssigkeit bedeckt ist. Das erste Messgerät meldet auch in diesem Fall ein Unterschreiten des vorgegebenen Dichtegrenzwertes. Um eine Fehlinterpretation dieser geringen Dichte in Bezug auf die Dichtheit des Tanks zu verhindern, ist das zweite Messgerät in dem Behältnis angeordnet. Dieses überwacht den Füllstand des Mediums in der Talsohle. Die beiden schwingfähigen Einheiten sind relativ zueinander derart angeordnet, dass die erste schwingfähige Einheit auf jeden Fall mit Medium bedeckt ist, wenn die zweite schwingfähige Einheit bedeckt ist. Das zweite Messgerät ist somit dazu ausgebildet, die Bedeckung der schwingfähigen Einheit des ersten Messgeräts zu überwachen und stellt eine Sicherheitsfunktion im Fall des Trockenlaufens der Talsohle dar. Nur wenn das zweite Messgerät angibt, dass die beiden schwingfähigen Einheiten mit Medium bedeckt sind, und das erste Messgerät ein Unterschreiten des Dichtegrenzwertes signalisiert, wird ein Alarmsignal erzeugt, welches das Auftreten einer Leckage bedeutet.

Eine erste Ausgestaltung der erfindungsgemäßen Lösung sieht vor, dass in Flussrichtung hinter dem ablaufseitigen Teilbereich des Behältnisses ein ansteuerbares Verschlusselement angeordnet ist, welches im geschlossenen, Zustand ein Ablaufen von Medium aus dem Behältnis verhindert, und dass die Auswerteeinheit das Verschlusselement schließt, wenn sich Flüssigkeit aus dem Tank in dem Behältnis befindet.

In einer Ausgestaltung ragt die zweite schwingfähige Einheit in den ablaufseitigen Teilbereich der Talsohle hinein.

Gemäß einer Ausgestaltung sind das erste Messgerät und das zweite Messgerät an einer der Talsohle abgewandten Oberseite des Behältnisses angebracht und ragen im Wesentlichen senkrecht in das Behältnis hinein.

In einer Ausgestaltung ist die zweite schwingfähige Einheit derart oberhalb der ersten schwingfähigen Einheit angeordnet, dass die Bedeckung der ersten schwingfähigen Einheit mit Medium von dem zweiten Messgerät überwachbar ist.

Gemäß einer weiteren Ausgestaltung des Systems ist zumindest die erste schwingfähige Einheit von einem flüssigkeitsdurchlässigen Schutzelement umgeben. In einer vorteilhaften Ausgestaltung handelt es sich bei dem Schutzelement um ein Lochblech.

In einer Ausgestaltung der Erfindung erzeugt die Auswerteeinheit ein Alarmsignal, wenn sich Flüssigkeit aus dem Tank in dem Behältnis befindet.

Die Erfindung wird anhand der nachfolgenden Figuren näher erläutert.
Fig. 1 zeigt schematisch den Aufbau eines Systems zur Überwachung der Dichtheit eines Tanks;
Fig. 2 zeigt schematisch eine Vorderansicht einer Ausgestaltung des Behältnisses:

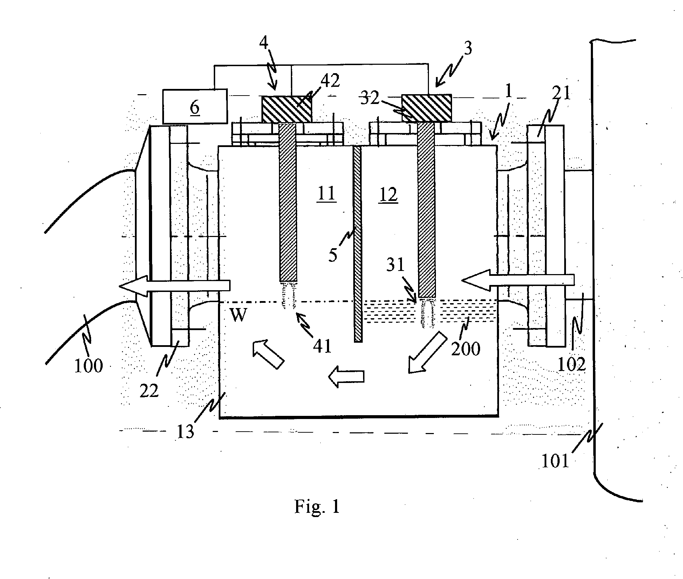

In Fig. 1 ist schematisch der Aufbau des erfindungsgemäßen Systems zur Tankleckageüberwachung dargestellt. Der Tank 101 - beispielsweise ein Lagerbehälter für einen Kraftstoff - ist nur andeutungsweise dargestellt. Das Behältnis 1 ist kastenförmig und weist zwei gegenüberliegend angeordnete Öffnungen mit Flanschen 21, 22 zum Einbringen als Zwischenstück in eine Ablaufrohrleitung 100, 102 auf, wobei die Ablaufrohrleitung 100, 102 die von einer nicht dargestellten Auffangrinne am oder im Tank 101 aufgefangene Flüssigkeit beispielsweise dem Abwasser zuführt. In dieser vorteilhaften Ausgestaltung ist das Behältnis 1 zwischen einem Anschlussstutzen 102 in der Wandung des Tanks 101, und einem Ablaufrohr 100 angeordnet. Der Anschlussstutzen 102 ist bei zur Lagerung von Kraftstoffen oder Ölen üblichen doppelwandigen Tanks 101 in die äußere Wandung eingebracht, und mit der in diese äußere Wandung integrierten Auffangrinne verbunden, sodass sämtliche angesammelte Flüssigkeit durch den Anschlussstutzen 102 abgeleitet wird. In der Regel fließt Regenwasser durch die Ablaufrohrleitung 100, 102; im Fall eines Lecks in dem Tank 101 fließt zusätzlich die austretende Lagerflüssigkeit 200 mit. Die Öffnungen des Behältnisses 1 besitzen bevorzugt den gleichen Durchmesser wie das Ablaufrohr 100 und der Anschlussstutzen 102. Der Innenraum des Behältnisses 1 ist jedoch derart ausgestaltet, dass sich eine Talsohle 13 ausbildet, welche die einlaufende Flüssigkeit überwinden muss, ehe sie durch das Ablaufrohr 100 abfließen kann. Durch das Stauelement 5, welches seitlich mit der Wandung des Behältnisses 1 verbunden ist, wird ein direkter Durchfluss verhindert, sodass die einlaufende Flüssigkeit die Talsohle 13 in jedem Fall passiert. Die Fließrichtung der Flüssigkeit ist durch die Pfeile angedeutet.

Das Stauelement 5 bewirkt weiterhin, dass die auf Grund der geringeren Dichte auf Wasser aufschwimmende Lagerflüssigkeit 200 beim Einlaufen in das Behältnis 1 im zulaufseitigen Teilbereich 12 des Behältnisses 1 zurückgehalten wird und sich unterhalb der Wasserstandslinie W anstaut. Die aus dem Tank 101 stammende Lagerflüssigkeit 200 gelangt erst in den ablaufseitigen Teilbereich 11 des Behältnisse 1, wenn Menge und Druck ausreichen, um unter dem Stauelement 5 hindurch zu fließen. Das erfindungsgemäße System detektiert die Lagerflüssigkeit 200 jedoch bereits beim Vorliegen einer geringen Menge, sodass die Lagerflüssigkeit 200 zwar in den ablaufseitigen Teilbereich 11 gelangen kann, jedoch durch direkt nach der Detektion ergriffene Maßnahmen am Abfließen durch das Ablaufrohr 100 gehindert werden kann.

Das Behältnis 1 ist waagerecht eingebaut, sodass sich in der Talsohle 13 ansammelnde Flüssigkeit eine gleichmäßige Füllstandshöhe besitzt. Der durch die Höhe der Talsohle 13 vorgegebene maximale Pegel ist durch die Wasserstandslinie W angedeutet. Von oben her sind ein erstes vibronisches Messgerät 3 zur Bestimmung der Dichte und ein zweites vibronisches Messgerät 4 zur Bestimmung eines Grenzfüllstands in das Behältnis 1 eingebracht. Die schwingfähigen Einheit 31, 41 der vibronischen Messgeräte 3, 4 sind an einer Rohrverlängerung befestigt, welche senkrecht in das Behältnis 1 hineinragt. Das erste Messgerät 3 befindet sich im zulaufseitigen Teilbereich 12 des Behältnisses 1, während das zweite Messgerät 4 bevorzugt in den ablaufseitigen Teilbereich 11 eingebracht ist. Die erste schwingfähige Einheit 31 des ersten Messgeräts 3 ist vorzugsweise derart angeordnet, dass sie sich gerade vollständig unterhalb der Wasserstandslinie W befindet. Ein geringerer Abstand vom Boden der Talsohle 13 ist ebenfalls möglich, jedoch muss sich die erste schwingfähige Einheit 31 auf einer Höhe befinden, welche von dem Stauelement 5 ebenfalls eingenommen wird. Die zweite schwingfähige Einheit 41 des zweiten Messgeräts 4 ist etwas oberhalb der ersten schwingfähigen Einheit 31 angeordnet. Durch den waagerechten Flüssigkeitsstand kann das zweite Messgerät 4 somit überwachen, ob die erste schwingfähige Einheit 31 von Flüssigkeit bedeckt ist. Vorzugsweise ist die zweite schwingfähige Einheit 41 relativ zur ersten schwingfähigen Einheit 31 derart positioniert, dass der Schaltpunkt des zweiten Messgerätes 4, welcher in der Regel bei der Bedeckung der unteren Hälfte der schwingfähigen Einheit 41 erreicht ist, mit der vollständigen Bedeckung der ersten schwingfähigen Einheit 31 einhergeht.

Ein Gehäuse 32, 42 der Messgeräte 3, 4, in welchem beispielsweise Anzeigeelemente und Elektronik untergebracht sind, verbleibt jeweils außerhalb des Behältnisses 1 und ist mit einer Auswerteeinheit 6 verbunden. Diese wertet aus, ob die Dichte der im zulaufseitigen Teilbereich 12 des Behältnisses 1 befindlichen Flüssigkeit im Wesentlichen der Dichte von Wasser entspricht, oder geringer ist und somit aus dem Tank 101 stammende Lagerflüssigkeit 200 in das Behältnis 1 gelangt ist. Die Auswerteeinheit 6 steuert ein der besseren Übersichtlichkeit wegen nicht dargestelltes Verschlusselement, beispielsweise in Form einer Klappe oder eines Schiebers, welches hinter dem ablaufseitigen Teilbereich 11 des Behältnisses 1 in das Ablaufrohr 100 eingebracht ist und im Bedarfsfall das Ablaufen von Flüssigkeit aus dem Behältnis 1 in das Ablaufrohr 100 verhindert. Der Bedarfsfall tritt ein, wenn das erste Messgerät 3 eine unterhalb eines vorgegebenen Grenzwertes liegende Dichte misst und gleichzeitig das zweite Messgerät 4 angibt, dass die zweite schwingfähige Einheit 41 und somit auch die erste schwingfähige Einheit 31 mit Medium bedeckt ist, d.h. nicht in Luft schwingt.

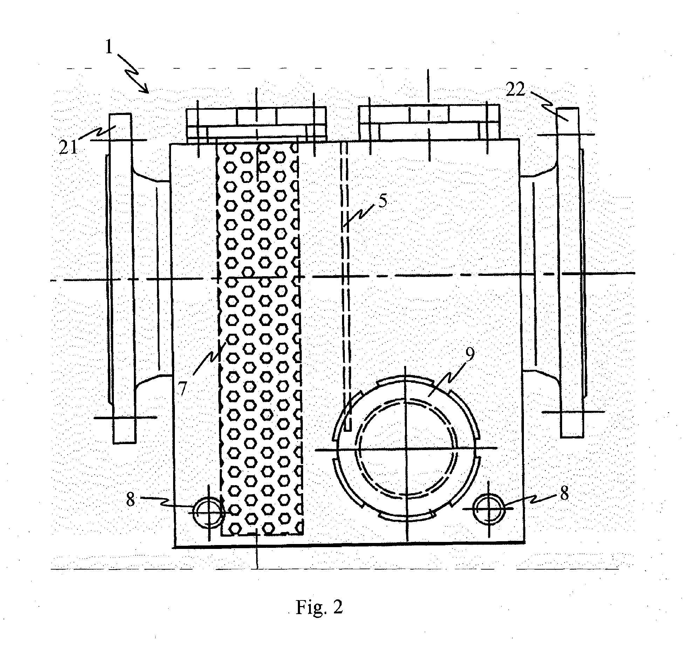

Fig. 2 offenbart eine vorteilhafte Ausgestaltung des Behältnisses 1. Um die schwingfähigen Einheiten 31, 41 reinigen zu können befindet sich ein Spülanschluss 9 in der Wandung des Behältnisses 1. Zur optischen Kontrolle beispielsweise des Verschmutzungsgrads, der in dem Behältnis 1 vorhandenen Flüssigkeifsmenge, oder dem Vorhandensein von aus dem Tank 101 in das Behältnis 1 gelangter Bestandteile, sind zwei Schaugläser 8 in die Wandung eingebracht. Zum Schutz der im zulaufseitigen Teilbereich 12 des Behältnisses 1 befindlichen ersten schwingfähigen Einheit 31 ist ein Schutzelement 6 zylinderförmig um den in das Behältnis 1 hineinragenden Bereich des ersten Messgeräts 3 angeordnet. Vorzugsweise handelt es sich bei dem Schutzelement 6 um ein Lochblech. Dieses ermöglicht den ungestörten Zulauf der Flüssigkeit, deren Dichte zu bestimmten ist, und hält gleichzeitig größere Gegenstände, wie beispielsweise in das Behältnis 1 gelangte Reinigungslappen, oder auch Tiere, von der ersten schwingfähigen Einheit 31 fern.

### Bezugszeichenliste

- 1: Behältnis
- 11: Zulaufseitiger Teilbereich
- 12: Ablaufseitiger Teilbereich
- 13: Talsohle
- 21: Flansch
- 22: Flansch
- 3: Erstes Messgerät
- 31: Erste schwingfähige Einheit
- 32: Gehäuse
- 4: Zweites Messgerät
- 41: Zweite schwingfähige Einheit
- 42: Gehäuse
- 5: Stauelement
- 6: Auswerteeinheit
- 7: Schutzelement
- 8: Schauglas
- 9: Spülanschluss
- 100: Ablaufrohr
- 101: Tank
- 102: Anschlussstutzen
- 200: Lagerflüssigkeit

## Patentansprüche

1. System zur Überwachung der Dichtheit eines Tanks (101), welcher zumindest teilweise mit einer Flüssigkeit (200) gefüllt ist, wobei die Flüssigkeit (200) eine geringere Dichte als Wasser aufweist, und welcher über eine Flüssigkeitsauffangrinne und eine mit dieser verbundene Flüssigkeitsablaufrohrleitung (100, 102) verfügt,
mit einem eine Talsohle (13) aufweisenden Behältnis (1), welches derart im Wesentlichen waagerecht in die Flüssigkeitsablaufrohrleitung (100, 102) integriert ist, dass sich durch die Flüssigkeitsablaufrohrleitung (100, 102) fließendes Medium in der Talsohle (13) ansammelt,
mit einem Stauelement (5), welches das Behältnis (1) derart in einen zulaufseitigen Teilbereich (12) und einen ablaufseitigen Teilbereich (11) unterteilt, dass sich ein Ölabscheider ausbildet,
mit einem ersten vibronischen Messgerät (3) mit einer in den zulaufseitigen. Teilbereich (12) der Talsohle (13) hineinragenden ersten schwingfähigen Einheit (31), welches bestimmt, ob die Dichte des die erste schwingfähige Einheit (31) umgebenden Mediums einen vorgegebenen Grenzwert unterschreitet, und einen entsprechenden Messwert ausgibt,
mit einem zweiten vibronischen Messgerät (4) mit einer zweiten schwingfähigen Einheit (41), welche höchstens auf der Höhe der ersten schwingfähigen Einheit (31) angeordnet ist, welches detektiert, ob die zweite schwingfähige Einheit (41) mit Medium bedeckt ist, und einen entsprechenden Messwert ausgibt
und
mit einer Auswerteeinheit (6), welcher die Messwerte des ersten Messgerätes (3) und des zweiten Messgerätes (4) zugeführt sind, und welche an Hand der Messwerte bestimmt, ob sich Flüssigkeit (200) aus dem Tank (101) in dem Behältnis (1) befindet.

2. System nach Anspruch 1,
**dadurch gekennzeichnet,**
**dass** in Flussrichtung hinter dem ablaufseitigen Teilbereich (11) des Behältnisses (1) ein ansteuerbares Verschlusselement angeordnet ist, welches im geschlossenen Zustand ein Ablaufen von Medium aus dem Behältnis (1) verhindert, und dass die Auswerteeinheit (6) das Verschlusselement schließt, wenn sich Flüssigkeit (200) aus dem Tank (101) in dem Behältnis (1) befindet.

3. System nach Anspruch 1 oder 2,
**dadurch gekennzeichnet,**
**dass** die zweite schwingfähige Einheit (41) in den ablaufseitigen Teilbereich (11) der Talsohle (13) hineinragt.

4. System nach einem der vorangehenden Ansprüche,
**dadurch gekennzeichnet,**
**dass** das erste Messgerät (3) und das zweite Messgerät (4) an einer der Talsohle (13) abgewandten Oberseite des Behältnisses (1) angebracht sind und im Wesentlichen senkrecht in das Behältnis (1) hineinragen.

5. System nach einem der vorangehenden Ansprüche,
**dadurch gekennzeichnet,**
**dass** die zweite schwingfähige Einheit (41) derart oberhalb der ersten schwingfähigen Einheit (31) angeordnet ist, dass die Bedeckung der ersten schwingfähigen Einheit (31) mit Medium von dem zweiten Messgerät (4) überwachbar ist.

6. System nach einem der vorangehenden Ansprüche,
**dadurch gekennzeichnet,**
**dass** zumindest die erste schwingfähige Einheit (31) von einem flüssigkeitsdurchlässigen Schutzelement (7) umgeben ist.

7. System nach Anspruch 6,
**dadurch gekennzeichnet,**
**dass** es sich bei dem Schutzelement (7) um ein Lochblech handelt.

8. System nach einem der vorangehenden Ansprüche,
**dadurch gekennzeichnet,**
**dass** die Auswerteeinheit (6) ein Alarmsignal erzeugt, wenn sich Flüssigkeit aus dem Tank (101) in dem Behältnis (1) befindet.

## Claims

1. System designed for monitoring the leak-tightness of a tank (101), said tank being filled at least partially with a liquid (200), wherein the liquid (200) has a density lower than that of water, and wherein said tank has a liquid collection channel and a liquid drain pipe (100,102) connected to said liquid collection channel,
with a receptacle (1) with a bottom (13), wherein said receptacle is integrated into the liquid drain pipe (100, 102) in an essentially horizontal manner such that medium flowing through the liquid drain pipe (100, 102) collects in the bottom (13),
with a retention element (5) which divides the receptacle (1) into a subzone on the inlet side (12) and a subzone on the outlet side (11) in such a way that an oil trap is formed,
with a first vibronic measuring device (3) with a first unit (31) capable of oscillation that extends into the inlet-side subzone (12) of the bottom (13), wherein said measuring device determines whether the density of the medium surrounding the first unit (31) capable of oscillation falls below a predetermined limit value and outputs a corresponding measured value
and with a second vibronic measuring device (4) with a second unit (41) that is capable of oscillation which is arranged at maximum at the level of the first unit (31) that is capable of oscillation, wherein said measuring device detects whether the second unit (41) that is capable of oscillation is covered by medium and outputs a corresponding measured value and
with an evaluation unit (6) to which the measured values of the first measuring device (3) and the second measuring device (4) are supplied and which determines, on the basis of the measured values, whether liquid (200) from the tank (101) is located in the receptacle (1).

2. System as claimed in Claim 1,
**characterized in that**
a controllable sealing element is arranged in the flow direction downstream from the outlet-side subzone (11) of the vessel (1), wherein, when closed, said sealing element prevents the medium from running out of the receptacle (1),
and **in that** the evaluation unit (6) closes the sealing element if liquid (200) from the tank (101) is located in the receptacle (1).

3. System as claimed in Claim 1 or 2,
**characterized in that**
the second unit (41) that is capable of oscillation projects into the outlet-side subzone (11) of the bottom (13).

4. System as claimed in one of the previous claims,
**characterized in that**
the first measuring device (3) and the second measuring device (4) are arranged on an upper section of the receptacle (1) which faces away from the bottom part (13) and project into the receptacle (1) in an essentially vertical manner.

5. System as claimed in one of the previous claims,
**characterized in that**
the second unit (41) that is capable of oscillation is arranged above the first unit (31) that is capable of oscillation in such a way that the second measuring device (4) can monitor the covering of the first unit (31) that is capable of oscillation with medium.

6. System as claimed in one of the previous claims,
**characterized in that**
at least the first unit (31) that is capable of oscillation is surrounded by a protective element (7) that is permeable to liquids.

7. System as claimed in Claim 6,
**characterized in that**
the protective element (7) is a perforated plate.

8. System as claimed in one of the previous claims,
**characterized in that**
the evaluation unit (6) generates an alarm signal if liquid (200) from the tank (101) is located in the receptacle (1).

## Revendications

1. Système destiné à la surveillance de l'étanchéité d'une cuve (101), laquelle est remplie au moins partiellement d'un liquide (200), le liquide (200) présentant une densité inférieure à celle de l'eau, et laquelle cuve dispose d'une gouttière de récupération de liquide et d'une conduite d'écoulement de liquide reliée avec la gouttière,
avec un récipient (1) présentant une partie inférieure (13), lequel récipient est intégré pour l'essentiel de manière horizontale dans la conduite d'écoulement de liquide (100, 102), de telle sorte que la conduite d'écoulement de liquide (100, 102) accumule du produit fluide dans la partie inférieure (13),
avec un élément de retenue (5), qui scinde le récipient (1) en une zone partielle côté alimentation (12) et en une zone partielle côté écoulement (11), de telle sorte à constituer un séparateur d'huile,
avec un premier appareil de mesure vibronique (3) doté d'une première unité apte à vibrer (31) s'étendant dans la zone partielle côté alimentation (12) de la partie inférieure (13), laquelle unité détermine si la densité du produit entourant la première unité apte à vibrer (31) parvient sous un seuil prédéfini, et délivre une valeur mesurée correspondante,
avec un deuxième appareil de mesure vibronique (4) doté d'une deuxième unité apte à vibrer (41), laquelle est disposée au maximum à la hauteur de la première unité apte à vibrer (31), lequel appareil détecte si la deuxième unité apte à vibrer (41) est recouverte de produit, et délivre une valeur mesurée correspondante et
avec une unité d'exploitation (6), à laquelle sont acheminées les valeurs mesurées du premier appareil de mesure (3) et du deuxième appareil de mesure (4), et laquelle détermine sur la base des valeurs mesurées si du liquide (200) issu de la cuve (101) se trouve dans le récipient (1).

2. Système selon la revendication 1,
**caractérisé**
**en ce qu'**un élément de fermeture pilotable est disposé dans le sens de l'écoulement, en aval de la zone partielle côté écoulement (11) du récipient (1), lequel élément empêche à l'état fermé un écoulement du produit à partir du récipient (1), et en ce que l'unité d'exploitation (6) ferme l'élément de fermeture lorsque du liquide (200) issu du réservoir (101) se trouve dans le récipient (1).

3. Système selon la revendication 1 ou 2,
**caractérisé**
**en ce que** la deuxième unité apte à vibrer (41) s'étend dans la zone partielle côté écoulement (11) de la partie inférieure (13).

4. Système selon l'une des revendications précédentes,
**caractérisé**
**en ce que** le premier appareil de mesure (3) et le deuxième appareil de mesure (4) sont disposés sur un côté supérieur du récipient (1) situé à l'opposé à la partie inférieure (13) et s'étendant pour l'essentiel verticalement dans le récipient (1).

5. Système selon l'une des revendications précédentes,
**caractérisé**
**en ce que** la deuxième unité apte à vibrer (41) est disposée au-dessus de la première unité apte à vibrer (31), de telle sorte que le recouvrement de la première unité apte à vibrer (31) avec du produit puisse être surveillé par le deuxième appareil de mesure (4).

6. Système selon l'une des revendications précédentes,
**caractérisé**
**en ce qu'**au moins la première unité apte à vibrer (31) est entourée d'un élément de protection (7) perméable aux liquides.

7. Système selon la revendication 6,
**caractérisé**
**en ce que**, concernant l'élément de protection (7), il s'agit d'une tôle perforée.

8. Système selon l'une des revendications précédentes,
**caractérisé**
**en ce que** l'unité d'exploitation (6) génère un signal d'alarme lorsque du liquide issu de la cuve (101) se trouve dans le récipient (1).
